Europäisches Patentamt

European Patent Office

Office européen des brevets

(19)

(11) Veröffentlichungsnummer: **0 266 717 B1**

# EUROPÄISCHE PATENTSCHRIFT

(12)

(45) Veröffentlichungstag der Patentschrift: **21.08.91**

(51) Int. Cl.5: **F16D 23/04**, F16D 69/02

(21) Anmeldenummer: **87116072.7**

(22) Anmeldetag: **31.10.87**

(54) **Verfahren und Vorrichtung zum Herstellen von reibschlüssigen Elementen, insbesondere von Synchronisierungskörpern in Stufengetrieben von Kraftfahrzeugen.**

(30) Priorität: **03.11.86 DE 3637386**

(43) Veröffentlichungstag der Anmeldung:
**11.05.88 Patentblatt 88/19**

(45) Bekanntmachung des Hinweises auf die
Patenterteilung:
**21.08.91 Patentblatt 91/34**

(84) Benannte Vertragsstaaten:
**DE ES FR GB IT SE**

(56) Entgegenhaltungen:
**DE-B- 1 236 345**
**DE-C- 3 417 813**
**FR-A- 1 570 493**
**FR-A- 2 276 503**

(73) Patentinhaber: **ZWN ZAHNRADWERK NEUEN-
STEIN GMBH & CO.**
**Hermann-Hagenmeyer-Strasse**
**W-7113 Neuenstein(DE)**

(72) Erfinder: **Müller, Erich R.**
**Hohe Strasse 15**
**W-7110 Öhringen-Cappel(DE)**
Erfinder: **Schmidt, Günther**
**Hofgartenstrasse 16**
**W-7106 Neuenstadt(DE)**
Erfinder: **Hofmeister, Klaus**
**Am Altenberg 4**
**W-7110 Öhringen-Michelbach(DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1(DE)**

**Beschreibung**

Die Erfindung betrifft ein Verfahren und eine Vorrichtung zum Herstellen von Synchronringen für Stufengetriebe von Kraftfahrzeugen, bei dem auf eine konische Oberfläche eines metallischen Grundkörpers ein Reibkörper mit einem Streusinter-Reibbelag aufgebracht wird.

Ein derartiges Verfahren ist aus der DE-B-34 17 813 bekannt.

Bei dem bekannten Verfahren wird ein körniges, sinterbares Reibmaterial auf ein ebenes Trägerblech aufgestreut und mit dem Trägerblech in einem Ofen gesintert. Das ebene Trägerblech wird alsdann durch ein- oder mehrmaliges Pressen verdichtet.

Nach dem Sintern und Verdichten wird das Trägerblech in geeignete Zuschnitte zerschnitten, und die Zuschnitte werden durch Tiefziehen in die gewünschte Form des Reibbelages gebracht. Insbesondere kann diese Form eine wellenartige Form um eine Kegelfläche herum sein. Der so geformte Reibkörper wird alsdann in Anlage an einen metallischen Grundkörper des reibschlüssigen Elementes, beispielsweise eine kegelförmige Bohrung eines Synchronringes, gebracht und dort z.B. durch Anschweißen befestigt. Bei der genannten wellenförmigen Gestalt kann der Reibkörper im Bereich der Wellenbäuche punktweise angeschweißt werden, die an die innen kegelförmige Fläche des reibschlüssigen Elementes angrenzen.

Das bekannte Verfahren hat jedoch den Nachteil, daß eine Reihe von Zwischenschritten erforderlich ist, um zunächst den Reibbelag als Zwischenprodukt aus dem Streusinter-Pulver und dem Trägerblech herzustellen, zu formen und dann an den Grundkörper, beispielsweise des Synchronringes, anzuschweißen.

Aus der FR-A-1 570 493 ist ein Verfahren zum Herstellen von Kupplungs- oder Bremslamellen bekannt. Hierunter versteht man ebene, ringförmige flache Gebilde, die üblicherweise an ihrem Außenumfang eine Verzahnung aufweisen und an ihrem Innenumfang mit einem kreisringförmigen Reibbelag versehen sind. Bei dem bekannten Verfahren wird der Reibbelag so hergestellt, daß zunächst ein Pulver lose auf den metallischen Grundkörper aufgebracht und im losen, d.h. unverdichteten Zustand vorgesintert wird. Der auf diese Weise vorgesinterte poröse Reibbelag wird dann verdichtet und in einem weiteren Verfahrensschritt fertiggesintert. Der auf diese Weise fertiggesinterte Reibbelag kann nun in einem weiteren Verdichtungsschritt noch auf Maß kalibriert werden.

Eine Anwendung des bekannten Verfahrens auf Grundkörper mit nicht-ebenen, beispielsweise konischen Oberflächen, ist jedoch weder möglich, noch beabsichtigt.

Der Erfindung liegt demgegenüber die Aufgabe zugrunde, ein Verfahren und eine Vorrichtung der eingangs genannten Art dahingehend weiterzubilden, daß die vorstehend geschilderten Verfahrensschritte des Standes der Technik eingespart werden.

Gemäß dem eingangs genannten Verfahren wird diese Aufgabe erfindungsgemäß dadurch gelöst, daß der Reibkörper ausschließlich aus einem Streusinter-Pulver besteht und direkt auf die Oberfläche des Grundkörpers aufgesintert wird, indem der Grundkörper mit einem Einsatzkörper zusammengesetzt wird, wobei der Einsatzkörper Zentriermittel zum Halten des Grundkörpers in einer definierten Position sowie eine im definierten Abstand von der Oberfläche angeordnete Gegenfläche aufweist, ferner der durch den definierten Abstand, die Oberfläche und die Gegenfläche gebildete Hohlraum mit einem Streusinter-Pulver gefüllt wird, und schließlich der Einsatzkörper mit dem Grundkörper bei gefülltem Hohlraum gesintert wird.

Die der Erfindung zugrundeliegende Aufgabe wird auf diese Weise vollkommen gelöst, weil die Verwendung eines gesonderten Trägerblechs entfällt und damit zahlreiche Arbeitsschritte eingespart werden können, wie sie beim Stand der Technik noch erforderlich waren. Auf diese Weise ergibt sich ein deutlich vereinfachter Herstellungsprozeß. Ferner hat die Erfindung den Vorteil, daß der Reibbelag in seiner endgültigen Form in einem Verfahrensschritt hergestellt wird, bei dem gleichzeitig der Reibbelag auf die entsprechende Fläche des reibschlüssigen Elementes aufgesintert wird. Damit ergibt sich ferner der Vorteil, daß durch entsprechende Dimensionierung des Hohlraums in weiten Grenzen vorgebbare Formen von Reibbelägen erzeugt werden können. Ferner kann der Hohlraum so gestaltet werden, daß Drainagenuten oder sonstige Kanäle für das Schmiermittel durch entsprechende Gestaltung des Einsatzkörpers in einem Arbeitsgang mit erzeugt werden.

Diese Maßnahme hat den Vorteil, daß für den Bereich einer Außen-oder Innenverzahnung ein einfach herzustellendes gesondertes Teil verwendet werden kann, das nicht dem Sinterprozeß zum Aufbringen des Reibbelags unterworfen werden muß.

Bei einer Variante zu diesem Verfahren wird der Grundkörper nach dem Aufbringen des Reibbelags mittels geeigneter Umformverfahren, z.B. Schmieden, mit einer Umfangsverzahnung versehen.

Diese Maßnahme hat den Vorteil, daß verhältnismäßig einfach geformte Grundkörper als Halbzeuge eingesetzt werden können und daß eine Außen- oder Innenverzahnung anschließend aufgebracht wird, wobei zusätzlich die Umfangsverzahnung je nach gewünschtem Einsatzfall chargenweise variiert werden kann.

Gemäß der eingangs genannten Vorrichtung wird die der Erfindung zugrundeliegende Aufgabe bei einem Element mit kegelförmigem Reibbelag dadurch gelöst, daß der Einsatzkörper einen kegelförmigen Abschnitt aufweist, dessen Oberfläche von einer Oberfläche des Grundkörpers einen definierten Abstand aufweist.

Diese Maßnahme hat den Vorteil, daß der Grundkörper und der Einsatzkörper besonders einfach zusammengesetzt werden können, weil sich aufgrund der genannten Gestaltung von selbst ein hohlkegelstumpfförmiger Hohlraum ergibt, der leicht mit einem Streusinter-Pulver gefüllt werden kann. Auch das Ausformen des nach dem Sintern mit dem Reibbelag versehenen Elements vom Grundkörper ist unproblematisch, weil sich aufgrund der kegelförmigen Gestalt diese beide Teile leicht voneinander lösen lassen.

Eine besonders gute Wirkung wird schließlich noch dann erzielt, wenn der Grundkörper eine innenkegelförmige Oberfläche und der Einsatzkörper eine außenkegelförmige Oberfläche aufweisen, der Einsatzkörper ferner aus einem Material mit niedrigem Wärmeausdehnungskoeffizienten, vorzugsweise aus Keramik, besteht, und der Abstand unter Berücksichtigung einer thermischen Schrumpfung des Grundkörpers gleich einer Soll-Dicke des Reibbelags ist.

Diese Variante macht sich die Erkenntnis zunutze, daß das Endmaß, d.h. die sich letztendlich ergebende Oberflächengestalt des Reibbelags, dadurch reproduzierbar einstellen läßt, daß man einen kernartigen Einsatzkörper mit im Verlaufe des Herstellungsprozesses praktisch nicht variiernder Geometrie einsetzt, wie dies bei Keramik in einem Temperaturbereich zwischen Raumtemperatur und beispielsweise 800 °C im Rahmen der hier erforderlichen Genauigkeit der Fall ist. Durch die thermische Schrumpfung des sich abkühlenden Grundkörpers wird dann nämlich erreicht, daß der aus dem Streusinter-Pulver hergestellte Reibbelag durch überwiegend radiale Kräfte, d.h. ohne Scherbelastung, verdichtet wird, wobei sich das Endmaß infolge des forminvariablen Einsatzkörpers reproduzierbar von selbst einstellt.

Dies stellt gegenüber dem Stand der Technik einen ganz wesentlichen Vorteil dar, weil bei bekannten Herstellungsverfahren und Vorrichtungen ein "Gruppieren" der Grundkörper erforderlich war, je nachdem, welches Endmaß die kegelförmige Öffnung nach dem toleranzbehafteten Herstellen dieser Öffnung aufwies. Durch Einteilen von Grundkörpern in be stimmte Abmessungsbereiche und durch Zuordnen unterschiedlich dichter vorgefertigter Reibbeläge mit Trägerblech hat man seither diese Herstellungstoleranzen kompensiert. Mit den vorstehend geschilderten erfindungsgemäßen Merkmalen ist eine solche "Gruppierung" hingegen nicht mehr erforderlich, weil sich unabhängig vom Rohmaß in der kegeligen Öffnung des Grundkörpers das gewünschte Endmaß an der Oberfläche des Einsatzkörpers von selbst einstellt. Lediglich die Dicke des Reibbelags variiert mit den Toleranzen der kegeligen Öffnung des Grundkörpers, dies ist jedoch für den vorliegenden Einsatzfall ohne praktische Bedeutung.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination, sondern auch in anderen Kombinationen oder auch in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Schnittdarstellung eines Ausführungsbeispiels eines reibschlüssigen Elements, nämlich eines Synchronrings mit innenkegelförmigem Reibbelag und Außenverzahnung;

Fig. 2 bis 4 stark schematisierte Phasenbilder, im Schnitt, zur Erläuterung der erfindungsgemäßen Herstellung eines Synchronrings gemäß Fig. 1;

Fig. 5 eine Darstellung ähnlich Fig. 1 zur Erläuterung einer Variante eines erfindungsgemäß hergestellten Synchronrings;

Fig. 6 eine Darstellung ähnlich Fig. 4 zur Erläuterung der Herstellung eines anderen Synchronrings mit kegelförmigem Reibbelag an der Innen- und Außenseite.

Die nachstehende Beschreibung von Ausführungsbeispielen der Erfindung orientiert sich am Beispiel von Synchronringen als reibschlüssigen Elementen, es versteht sich jedoch, daß die Erfindung gleichermaßen bei anderen Arten reibschlüssiger Elemente verwendbar ist, wie sie insbesondere in Kraftfahrzeuggetrieben verwendet werden. Es versteht sich ferner, daß die Gestaltung der jeweiligen Reibbeläge ebenfalls nicht einschränkend zu verstehen ist, sondern daß auch andere als kegelförmige Reibbeläge, insbesondere zylindrische oder ebene Reibbeläge, verwendet werden können, ohne den Rahmen der vorliegenden Erfindung zu verlassen.

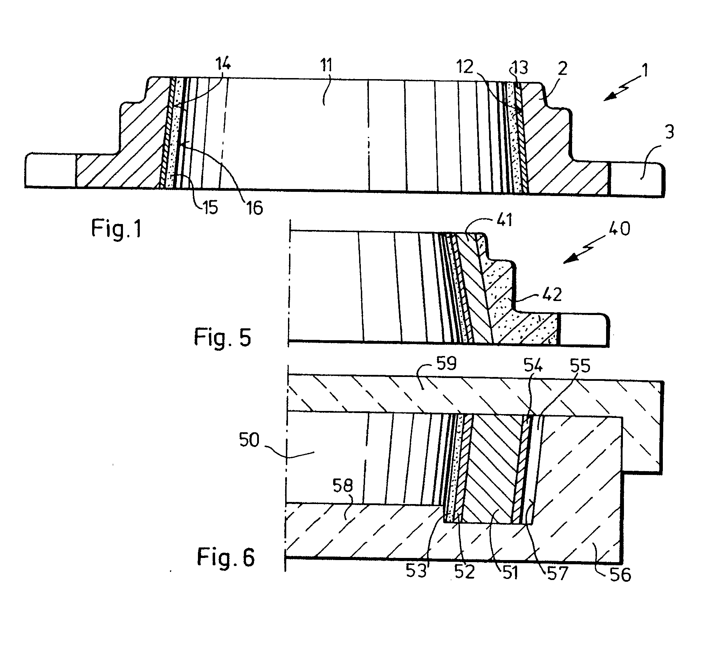

In Fig. 1 ist mit 1 insgesamt ein Synchronring bezeichnet, der im wesentlichen aus einem torusförmigen Metallkörper 2 mit angesetzter Außenverzahnung 3 besteht. Der Synchronring 1 wird von einer kegelförmigen Öffnung 11 durchsetzt, die durch eine erste kegelförmige Innenfläche 12 des Metallkörpers 2 definiert ist. Auf der ersten Innenfläche 12 ist eine Haftgrundschicht 13 angeordnet, die somit außen eine zweite, kegelförmige Innenfläche 14 definiert. Auf der Haftgrundschicht 13 befindet sich ein Reibbelag 15, der nach innen eine dritte, ebenfalls kegelige Innenfläche 16 definiert. Die dritte Innenfläche 16 muß innerhalb sehr enger Toleranzen auf Sollmaß hinsichtlich des Kegelwinkels und der vorliegenden Durchmesser hergestellt werden.

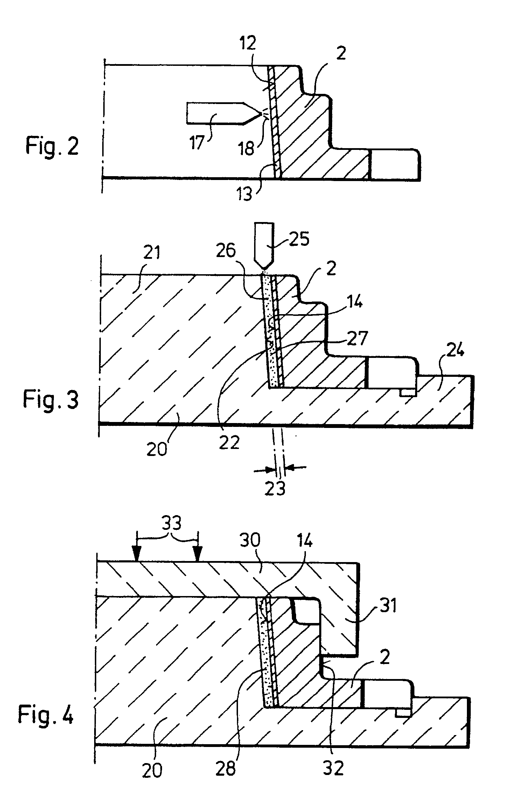

Zur Herstellung eines Synchronrings gemäß Fig. 1 kann man sich erfindungsgemäß eines Verfahrens bedienen, wie es nachstehend anhand der Fig. 2 bis 4 erläutert werden wird.

Zunächst wird als Halbzeug der unbeschichtete Metallkörper 2 hergenommen und an seiner ersten Innenfläche 12 mit der Haftgrundschicht 13 versehen. Dies kann beispielsweise im Plasmasprüh-Verfahren mittels einer Spritzeinrichtung 17 geschehen, die ein geeignetes metallisches Pulver 18 auf die erste Innenfläche 12 spritzt. Als Pulver 18 kann ein Bronzepulver, ein Aluminium/Nickel-Pulver o. dgl., verwendet werden, wie dies an sich aus der Beschichtungstechnik bekannt ist.

Das Vorsehen einer Haftgrundschicht 13 ist im Rahmen der vorliegenden Erfindung zwar zweckmäßig, jedoch nicht zwingend erforderlich.

Nach dem Aufbringen der Haftgrundschicht 13 wird der Metallkörper 2 auf einen Einsatzkörper 20 gemäß Fig. 3 aufgesetzt. Der Einsatzkörper 20 weist einen zentrischen, außenkegeligen Abschnitt 21 auf, der an seinem Umfang eine Außenfläche 22 definiert. Bei aufgesetztem Metallkörper 2 ergibt sich ein definierter Abstand 23 der Außenfläche 22 zur zweiten Innenfläche 14, weil der Metallkörper 2 mittels eines Zen trierrandes 24 des Einsatzkörpers 20 in eine definierte, zentrierte Position gebracht wurde.

Mittels einer Pulverdosieranlage 25, wie sie beispielsweise von der Firma Lyman unter der Typennummer 55 im Handel ist, kann nun eine definierte Menge eines Streusinter-Pulvers 26 in den Hohlraum 27 eingefüllt werden, der durch die Flächen 14, 22 und den Abstand 23 gebildet wird. Der Einfüllvorgang kann, falls dies erforderlich sein sollte, durch Rütteln o. dgl. gefördert werden, so daß letztendlich eine Packung 28 des Pulvers 26 im Hohlraum 27 entsteht, wie es Fig. 4 zeigt.

Als Streusinter-Pulver 26 kommt eine Mischung in Frage, wie sie beispielsweise in der eingangs genannten DE-PS 34 17 813 geschildert wird.

Nach dem Einfüllen des Streusinter-Pulvers 26 wird gemäß Fig. 4 ein Deckel 30 auf den Einsatzkörper 20 und den Metallkörper 2 aufgesetzt, die an ihrer Oberseite jeweils miteinander fluchten. Der Deckel 30 kann an seinem Umfang mit einem Rand 31 versehen sein, der formschlüssig um einen entsprechenden Umfang 32 des Metallkörpers 2 faßt. Der Deckel 30 kann schließlich unter Druck an den Einsatzkörper 20 sowie den Metallkörper 2 angelegt werden, wie in Fig. 4 mit Pfeilen 33 angedeutet.

Der in Fig. 4 dargestellte Verbund wird nun gesamthaft gesintert, beispielsweise bei 800 ° C.

Während des Sinterns dehnt sich die Packung 28 des Streusinter-Pulvers 26 aus, ein Austreten aus dem Hohlraum 27 ist jedoch nicht möglich, da dieser nach oben durch den Deckel 30 verschlossen ist. Hierdurch wird die Packung 28 bzw. der daraus entstehende Reibbelag 15 verdichtet.

Eine weitere Verdichtung stellt sich dadurch ein, daß der Metallkörper 2, der einen endlichen Temperaturkoeffizienten der Ausdehnung aufweist, sich beim Abkühlen zuammenzieht, so daß die Packung 28 bzw. der daraus entstehende Reibbelag 15 auch in radialer Richtung verdichtet werden. Da man üblicherweise als Steigungswinkel für die kegeligen Flächen 12, 14, 16, 22 nur einen verhältnismäßig kleinen Winkel von beispielsweise 6,5° verwendet, erzeugt ein Zusammenziehen des Metallkörpers 2 über seinen Umfang und damit eine Verminderung seines Innendurchmessers praktisch nur radial gerichtete Kräfte, so daß die Packung 28 bzw. der daraus hervorgehende Reibbelag 15 praktisch keinen Scherbelastungen, d.h. Kräften in axialer Richtung, ausgesetzt wird.

Wie durch die Schraffur in den Fig. 3 und 4 angedeutet, kann zumindest der Einsatzkörper 20 aus Keramik bestehen. Durch Auswahl einer geeigneten Keramik kann man sicherstellen, daß innerhalb des bei dem erfindungsgemäßen Verfahren Temperaturbereichs zwischen Raumtemperatur und beispielsweise 800 ° C oder auch darüber eine nur unwesentliche Ausdehnung bzw. Schrumpfung des Einsatzkörpers 20 auftritt. Dies hat jedoch zur Folge, daß die sich am Ende des Verfahrens einstellende dritte Innenfläche 16 des Reibbelags 15 durch die Geometrie der insoweit unveränderlichen Außenfläche 22 des außenkegeligen Abschnitts 21 des Einsatzkörpers 20 definiert ist. Das Endmaß des Reibbelags 15 ist damit unabhängig von Toleranzen bei der Herstellung des Metallkörpers 2 bzw. dessen erster Innenfläche 12, weil derartige Toleranzen nur Einfluß auf den Abstand 23 bzw. die sich letztendlich einstellende Dicke des Reibbelags 13 haben.

Insgesamt wird daher bei dem Verfahren gemäß den Fig. 2 bis 4 ein Synchronring entsprechend Fig. 1 erzeugt, der unabhängig von Herstellungstoleranzen des Metallkörpers 2 ein definiertes Endmaß aufweist, wobei gleichzeitig der Reibbelag 15 in zweierlei Weise verdichtet wurde, was infolge des duktilen Gefüges des gesinterten Pulvers 26 um beispielsweise einige hundertstel Millimeter möglich ist.

Bei einer in Fig. 5 abschnittsweise dargestellten Variante eines Synchronrings 40 wird ein inneres Metallteil 41 verwendet, das keine Außenverzahnung aufweist. Nach dem bereits geschilderten Anbringen eines Reibbelags kann das innere Metallteil 41 mit einem äußeren Metallteil 42, insbesondere einem Sinterteil, versehen werden, das seinerseits die gewünschte Außenverzahnung trägt. Die Außenverzahnung kann für unterschiedliche Chargen von Synchronringen 40 unterschiedlich ausgeführt sein, ohne daß dies Einfluß auf das innere Metallteil 41 hätte.

Schließlich zeigt Fig. 6 noch eine Variante mit einem Synchronring 50, dessen torusförmiger Metallkörper 51 auf beiden Seiten mit einem Reibbelag versehen werden soll. Hierzu ist auf der Innenseite des Metallkörpers 51 auf wiederum innenkegelförmigen Oberflächen zunächst eine innere Haftgrundschicht 52 und darauf ein innerer Reibbelag 53 angebracht, wie dies bereits geschildert wurde.

Zusätzlich soll jedoch auf eine äußere Haftgrundschicht 54 mit außenkegeliger Gestalt mittels eines Hohlraums 55 zwischen dem Metallkörper 51 und einem entsprechend geformten Einsatzkörper 56 ein äußerer Reibbelag erzeugt werden.

Hierzu weist der Einsatzkörper 56 eine entsprechende innenkegelige Fläche 57 auf, und ein Zentriervorsprung 58 des Einsatzkörpers 56 hält den Metallkörper 51 in dessen Mitte. Die Anordnung kann wiederum mittels eines Deckels 59 verschlossen werden, nachdem der Hohlraum 55 in der bereits geschilderten Weise mit einem Streusinter-Pulver gefüllt wurde.

**Patentansprüche**

1. Verfahren zum Herstellen von Synchronringen für Stufengetriebe von Kraftfahrzeugen, bei dem auf eine konische Oberfläche (12, 14) eines metallischen Grundkörpers (2; 41; 51) ein Reibkörper mit einem Streusinter-Reibbelag (15; 53) aufgebracht wird, dadurch gekennzeichnet, daß der ausschließlich aus einem Streusinter-Pulver (26) bestehende Reibkörper direkt auf die Oberfläche (12, 14) des Grundkörpers (2; 41; 51) aufgesintert wird, indem der Grundkörper (2; 41; 51) mit einem Einsatzkörper (20; 56) zusammengesetzt wird, wobei der Einsatzkörper (20; 56) Zentriermittel (24; 58) zum Halten des Grundkörpers (2; 41; 51) in einer definierten Position sowie eine im definierten Abstand (23) von der Oberfläche (12, 14) angeordnete Gegenfläche (22; 57) aufweist, ferner der durch den definierten Abstand (22), die Oberfläche (12, 14) und die Gegenfläche (22, 57) gebildete Hohlraum (27; 55) mit einem Streusinter-Pulver (26) gefüllt wird, und schließlich der Einsatzkörper (20; 56) mit dem Grundkörper (2; 41; 51) bei gefülltem Hohlraum (27; 55) gesintert wird.

2. Verfahren nach Anspruch 1, dadurch gekennzeichnet, daß der Grundkörper (2; 41; 51) zunächst mit einer Haftgrundschicht (13; 52, 54) versehen wird und daß die Oberfläche (14) die Oberfläche (14) der Haftgrundschicht (13; 52, 54) ist.

3. Verfahren nach Anspruch 2, dadurch gekennzeichnet, daß die Haftgrundschicht (13; 52, 54) mittels Plasmaspritzen eines metallischen Pulvers (16) aufgebracht wird.

4. Verfahren nach einem der Ansprüche 1 oder 2, dadurch gekennzeichnet, daß der Hohlraum (27; 55) nach dem Befüllen mit einem Deckel (30; 59) verschlossen wird, der während des Sinterns auf dem Einsatzkörper (20; 56) und dem Grundkörper (2; 41; 51) verbleibt.

5. Verfahren nach einem der Ansprüche 1 bis 4, dadurch gekennzeichnet, daß bei einem torusförmigen Element der Grundkörper (41) nach dem Aufbringen des Reibbelags auf seiner nicht mit einem Reibbelag versehenen Seite mit einem weiteren torusförmigen, eine Umfangsverzahnung aufweisenden Teil (42), vorzugsweise einem Sinterteil, verbunden wird.

6. Verfahren nach einem der Ansprüche 1 bis 4, dadurch gekennzeichnet, daß der Grundkörper (2) nach dem Aufbringen des Reibbelags (15) mittels geeigneter Umformverfahren, z.B. Schmieden, mit einer Umfangsverzahnung (3) versehen wird.

7. Vorrichtung zur Durchführung des Verfahrens nach einem der vorhergehenden Ansprüche, dadurch gekennzeichnet, daß der Einsatzkörper (20; 56) einen kegelförmigen Abschnitt (21) aufweist, dessen Oberfläche (22; 57) von einer Oberfläche (14) des Grundkörpers (2; 41; 51) einen definierten Abstand (23) aufweist.

8. Vorrichtung nach Anspruch 7, dadurch gekennzeichnet, daß der Grundkörper (2) eine innenkegelförmige Oberfläche (12, 14) und der Einsatzkörper (20) eine außenkegelförmige Oberfläche (22) aufweist, daß der Einsatzkörper (20) aus einem Material mit niedrigem Wärmeausdehnungskoeffizienten, vorzugsweise aus Keramik, besteht und daß der Abstand (23) unter Berücksichtigung einer thermischen Dehnung bzw. Schrumpfung des Grundkörpers (2) gleich einer Soll-Dicke des Reibbelags (15) ist.

## Claims

1. A method for the manufacture of synchronizing rings for stepped transmissions of motor vehicles, wherein a friction body having a spray-sinter friction layer (15; 53) is mounted on a conical surface (12, 14) of a metallic base member (2; 41; 51), characterized in that the friction body consisting exclusively of a spray-sinter powder (26) is directly sintered onto the surface (12, 14) of the base member (2; 41; 51) by assembling the base member (2; 41; 51) with an insert member (20; 56), the insert member (20; 56) having centering means (24; 58) for holding the base member (2; 41; 51) in a predetermined position, and having, further, a countersurface (22; 57) in a predetermined distance (23) from the surface (12, 14), wherein the cavity (27; 55), established by the predetermined distance (23) with the surface (12, 14) and the countersurface (22; 57) is repleted with a spray-sinter powder (26), and the insert member (20; 56) is sintered together with the base member (2; 41; 51) while the cavity (27; 55) is repleted.

2. The method of claim 1, characterized in that the base member (2; 41; 51) is first provided with an adhesive base layer (13; 52; 54) , the surface (14) being the surface (14) of the adhesive base layer (13; 52, 54).

3. The method of claim 2, characterized in that the adhesive base layer (13; 52, 54) is applied by plasma-spraying a metallic powder (16).

4. The method of any of claims 1 or 2, characterized in that the cavity (27; 55) is closed after repletion by means of a cover (30; 59), the cover (30; 59) remaining on the insert member (20; 56) and the base member (2; 41; 51) during sintering.

5. The method of any of claims 1 - 4, characterized in that for a toroidal element the base member (41), after the deposition of the friction layer, is connected, on its side having not been provided with the friction layer, with another toroidal part having a circumferential toothing and being, preferably, a sintered part.

6. The method of any of claims 1 - 4, characterized in that the base member (2), after the deposition of the friction layer (15) is provided with a circumferential toothing (3) by means of appropriate forming processes, e.g. by forging.

7. An apparatus for executing the method of any of the preceding claims, characterized in that the insert member (20; 56) has a conical section (21), the surface (22; 57) of which having a predetermined distance (23) from a surface (14) of the base member (2; 41; 51).

8. The apparatus of claim 7, characterized in that the base member (2) has an inner conical surface (12, 14), that the insert member (20) has an outer conical surface (22), that the insert member (20) consists of a material having a low thermal expansion coefficient, preferably ceramics, and that the distance (23) is equivalent to a nominal thickness of the friction layer (15), by taking into account the thermal expansion or shrinking of the base member (2).

## Revendications

1. Procédé de fabrication de bagues de synchronisation pour transmissions de véhicules à moteur, par lequel, sur une surface conique (12, 14), d'une pièce de base métallique (2; 41; 51), est appliqué un corps de friction composé d'un revêtement de friction répandu fritté (15; 53), caractérisé en ce que le corps de friction composé exclusivement d'une poudre répandue de frittage (26), est appliqué directement sur la surface (12, 14) de la pièce de base (2; 41; 51), la pièce de base (2; 41; 51) étant pour cela assemblée à une pièce d'insert (20; 56), ladite pièce d'insert (20; 56) présentant un élément de centrage (24; 58) servant à maintenir la pièce de base (2; 41; 51) dans une position déterminée, ainsi qu'une contre-surface (22; 57) maintenant un espacement déterminé (23) avec la surface (12, 14), et également en ce que l'espace vide (27; 55) formé par l'espacement déterminé (23), entre la surface (12, 14) et la contre-surface (22; 57) est rempli d'une poudre repandue de frittage (26), et enfin en ce que la pièce de base (2; 41; 51) et la pièce d'application (20; 56), après remplissage de l'espace vide (27; 55) sont soumises à une opération de frittage.

2. Procédé selon la revendiation 1, caractérisé en ce que la pièce de base (2; 41; 51) reçoit au préalable une couche primaire d'adhérence (13; 52; 54), et en ce que la surface (14) est la surface (14) de la couche primaire d'adhérence (13; 52; 54).

3. Procédé selon la revendication 2, caractérisé en ce que la couche primaire d'adhérence (13; 52; 54) est une poudre métallique (16) appliquée par projections au plasma.

4. Procédé selon l'une des revendications 1 ou 2, caractérisé en ce que l'espace vide (27; 55), après avoir été rempli, est fermé par un couvercle (30; 59) qui reste en place sur la pièce d'insert (20; 56) et sur la pièce de base (2; 41; 51) pendant le processus de frittage.

5. Procédé selon l'une des revendications 1 à 4, caractérisé en ce qu'un élément de la pièce de base (41) en forme de manchon torique, après avoir reçu un revêtement de friction, est assemblé, par sa face dépourvue de revêtement de friction, à une seconde pièce de forme torique (42), de préférence obtenue par frittage, et pourvue d'une denture à sa périphérie.

6. Procédé selon l'une des revendications 1 à 4, caractérisé en ce que la pièce de base (2), après avoir reçu son revêtement de friction (15), est pourvu d'une denture périphérique (3) obtenue par un moyen de formage approprié, par example par une opération de forgeage.

7. Dispositif permettant de mettre en oeuvre le procédé selon l'une des revendications précédentes, caractérisé en ce que la pièce d'insert (20; 56) présente une partie conique (21) dont la surface (22; 57) maintient un espacement déterminé (23) avec la surface (14) de la pièce de base (2; 41; 51).

8. Dispositif selon la revendication 7, caractérisé en ce que la pièce de base (2) présente une surface intérieure de forme conique (12, 14), et la pièce d'insert (20) une surface extérieure de forme conique (22), en ce que la pièce d'insert (20) est faite dans un matériau présentant un faible coefficient de dilatation thermique, par exemple en céramique, et en ce que l'espacement (23), comptenu d'une dilatation thermique et/ou du retrait de la pièce de base (2), est égal à l'épaisseur désirée du revêtement de friction (15).

Fig.1

Fig. 5

Fig. 6

EP 0 266 717 B1

Fig. 2

Fig. 3

Fig. 4